# EUROPÄISCHE PATENTANMELDUNG

(11) **EP 1 656 873 A2**
(43) Veröffentlichungstag der Anmeldung: **17.05.2006**
(21) Anmeldenummer: 05024387.2
(22) Anmeldetag: 09.11.2005
(51) Int. Cl.: A47L 9/24

(54) **Schlauch, insbesondere Staubsaugerschlauch**

(30) Priorität: 10.11.2004 DE 202004017467 U
(71) Anmelder: TRUPLAST KUNSTSTOFFTECHNIK GMBH, D-35428 Langgöns (DE)
(72) Erfinder: Linhart, Georg Peter, 61206 Wöllstadt (DE)
(74) Vertreter: Oppermann, Mark

(57) **Zusammenfassung**

Es wird ein Schlauch, insbesondere Staubsaugerschlauch offenbart, mit mehreren nach außen offenen, schraubengangförmigen und seitlich von Rippen (1) begrenzten Nuten (2) zur Aufnahme elektrischer Leiter (4, 5) und mit einer die Nuten und die darin eingelegten elektrischen Leiter abdeckenden geflochtenen Schlauchhülle (6). Erfindungsgemäß öffnen sich die Nuten (2) ausgehend vom Nutgrund (3) ohne Verengung nach außen. Ein solcher Schlauch läßt sich besonders einfach und somit kostengünstig herstellen.

## Beschreibung

### TECHNISCHES GEBIET

Die vorliegende Erfindung bezieht sich auf einen Schlauch, insbesondere Staubsaugerschlauch, entsprechend dem Oberbegriff des Patentanspruchs 1.

### STAND DER TECHNIK

Staubsaugerschläuche mit integrierten elektrischen Leitern zur Verbindung des Staubsaugers mit motorisch angetriebenen Zusatzgeräten für Staubsauger, beispielsweise Walzenbürsten, sind in verschiedenen Ausführungsformen bekannt geworden.

So sind Doppelschläuche im Gebrauch, bei denen ein im Durchmesser kleinerer Schlauch mit der Innenwandung des Staubsaugerschlauchs durch Kleben fest verbunden ist und die elektrischen Leiter aufnimmt. Wegen des anzuwendenden Klebeverfahrens ist die Herstellbarkeit solcher Doppelschläuche auf verhältnismäßig kurze Schlauchlängen beschränkt.

Bei einem anderen bekannten Staubsaugerschlauch (WO 86/01990), der aus einem Kunststoffprofilstreifen schraubengangförmig gewickelt wird, ist ein elektrischer Leiter im Überlappungsbereich der Wicklung eingelegt, wozu allerdings eine die Flexibilität des Schlauchs beeinträchtigende Verdickung des Überlappungsbereichs erforderlich ist.

Vorgeschlagen wurde auch schon ein flexibler Staubsaugerschlauch (DE 25 05 144 A1), bei welchem in drei unterschiedlichen Ausführungsbeispielen ein oder mehrere schraubengangförmig angeordnete elektrische Leiter in einer oder mehreren außen überdeckten Nuten liegen. Bei einem Ausführungsbeispiel ist bei einem gewellten Schlauch ein elektrischer Leiter in eine die Rippen des Schlauchs schneidende schraubengangförmige Nut großer Steigung eingelegt. Bei den beiden anderen Ausführungsbeispielen sind glattwandige Innenschläuche mit einem flexiblen Band schraubengangförmig umwickelt, wobei eine unterbrochene Nut zur Aufnahme elektrischer Leiter durch in regelmäßigen Abständen im flexiblen Band vorgesehene äußere oder innere Ausschnitte gebildet ist. Durch die unterbrochene Nut werden radiale Festigkeit und Biegeverhalten des Staubsaugerschlauchs beeinträchtigt. In jedem Fall sind bei diesem bekannten Staubsaugerschlauch zusätzliche nutbildende Maßnahmen erforderlich.

Bei einem bekannten Schlauch, insbesondere Staubsaugerschlauch (DE 27 05 335 A1), der eingangs angegebenen Gattung sind die Nuten zur Aufnahme elektrischer Leiter als schraubengangförmige, nach außen offene Schwalbenschwanznuten ausgebildet, d.h. die Nuten sind am Nutgrund breiter als an der Öffnung, wobei der Öffnungsspalt kleiner sein soll als der Durchmesser der einzulegenden elektrischen Leiter. Im Ausführungsbeispiel ist der Schlauch mit sechs Nuten versehen, d.h. ist sechsgängig ausgebildet. Ganz davon abgesehen, daß die einstückige Herstellung eines so ausgebildeten Schlauchs schwierig wenn nicht unmöglich ist, müssen die Leiter zur Vereinigung mit dem Schlauch in die engen Öffnungsspalte der Schwalbenschwanznuten eingedrückt werden, was einen erheblichen Fertigungsaufwand verursacht.

### DARSTELLUNG DER ERFINDUNG

Der Erfindung liegt die Aufgabe zugrunde, einen Schlauch der eingangs angegebenen Gattung bereitzustellen, der sich einfach und somit kostengünstig herstellen läßt.

Diese Aufgabe wird erfindungsgemäß durch die im Patentanspruch 1 angegebenen Merkmale gelöst. Vorteilhafte oder zweckmäßige Weiterbildungen gehen aus den Patentansprüchen 2 bis 8 hervor und sind nachfolgend ebenfalls beschrieben.

Staubsaugerschläuche, bei denen sich die seitlich von den Rippen begrenzten Nuten ausgehend vom Nutgrund ohne Verengung nach außen öffnen, sind an sich seit langem bekannt. Bisher wurde aber noch nicht vorgeschlagen, elektrische Leiter einfach in die bei der Schlauchherstellung gebildeten schraubengangförmigen offenen Nuten, d.h. in die Wellentäler dieser Schläuche einzulegen. Es hat sich gezeigt, daß sich erfindungsgemäße Schläuche einfach und kostengünstig herstellen lassen und daß sich durch die eingelegten elektrischen Leiter an der radialen Stabilität und am Biegeverhalten der Schläuche nichts ändert.

Vorzugsweise wird die Erfindung an einem aus einem Doppelprofilstreifen schraubengangförmig zweigängig gewickelten Schlauch realisiert, bei dem in die Nuten zwei elektrische Leiter eingelegt sind, die durch eine Profilrippe voneinander getrennt sind, wie das im Patentanspruch 2 angegeben ist. Vorteilhaft können hierbei die beiden elektrischen Leiter schon beim Schlauchbildungsvorgang zugeführt und eingelegt werden, was die Herstellung sehr erheblich vereinfacht und verbilligt.

Aber auch aus einem Dreifachprofilstreifen schraubengangförmig dreigängig gewickelte Schläuche können erfindungsgemäß mit elektrischen Leitern ausgerüstet werden, wie aus dem Patentanspruch 3 hervorgeht. In diesem Fall können vorteilhaft drei elektrische Leiter eingelegt werden, die durch Profilrippen voneinander getrennt sind.

Die Erfindung ist nicht nur bei aus Profilstreifen gewickelten Schläuchen anwendbar, sondern auch bei glattwandig extrudierten oder gewickelten Schläuchen, auf welche wie im Patentanspruch 4 angegeben nut- und rippenbildende Profilstreifen schraubengangförmig aufgewendelt sind.

Es können in jede Nut auch jeweils zwei elektrische Leiter paarweise eingelegt sein, wie das im Patentanspruch 5 angegeben ist.

Der Staubsaugerschlauch in jeder seiner unterschiedlichen Ausbildungen kann entsprechend dem Patentanspruch 6 zweckmäßig noch mit einem glatten dünnwandigen Überzugsschlauch versehen sein, der wiederum von einer geflochtenen Schlauchhülle umgeben ist.

Die elektrischen Leiter können lose in die Nuten eingelegt sein und werden dort durch die geflochtene Schlauchhülle bzw. durch den Überzugsschlauch und die geflochtene Schlauchhülle gehalten, sie können jedoch auch in den Nuten durch Kleben oder Schweißen befestigt sein, wie im Patentanspruch 7 angegeben ist. Dabei sind sie entweder über die Leiterlänge durchgehend oder nur in regelmäßigen Abständen befestigt.

Die Erfindung kann auch bei sogenannten konischen oder doppeltkonischen Schläuchen zur Anwendung gelangen, wie aus dem Patentanspruch 8 hervorgeht. Dabei handelt es sich um Schläuche, deren lichte Querschnittsflächengröße zur Verbesserung der Strömungsverhältnisse über die Schlauchlänge zunimmt bzw. abnimmt .

### KURZE BESCHREIBUNG DER ZEICHNUNGEN

Weitere Einzelheiten der Erfindung werden nachfolgend anhand der verschiedene Ausführungsbeispiele darstellenden Zeichnungen näher erläutert. Darin zeigt:
- Fig. 1: einen abgebrochen dargestellten, teils im Längsschnitt und teils mit einer geflochtenen Schlauchhülle abgebildeten Staubsaugerschlauch,
- Fig. 2: einen abgebrochen dargestellten Staubsaugerschlauch im Längsschnitt, mit zwei elektrischen Leitern in jeder Nut, und
- Fig. 3: einen abgebrochen dargestellten, teils im Längsschnitt und teils mit verschiedenen Unhüllungen gezeigten Staubsaugerschlauch in einer von den Fig. 1 und 2 unterschiedlichen Ausführungsform.

### DETAILLIERTE BESCHREIBUNG VON AUSFÜHRUNGSBEISPIELEN

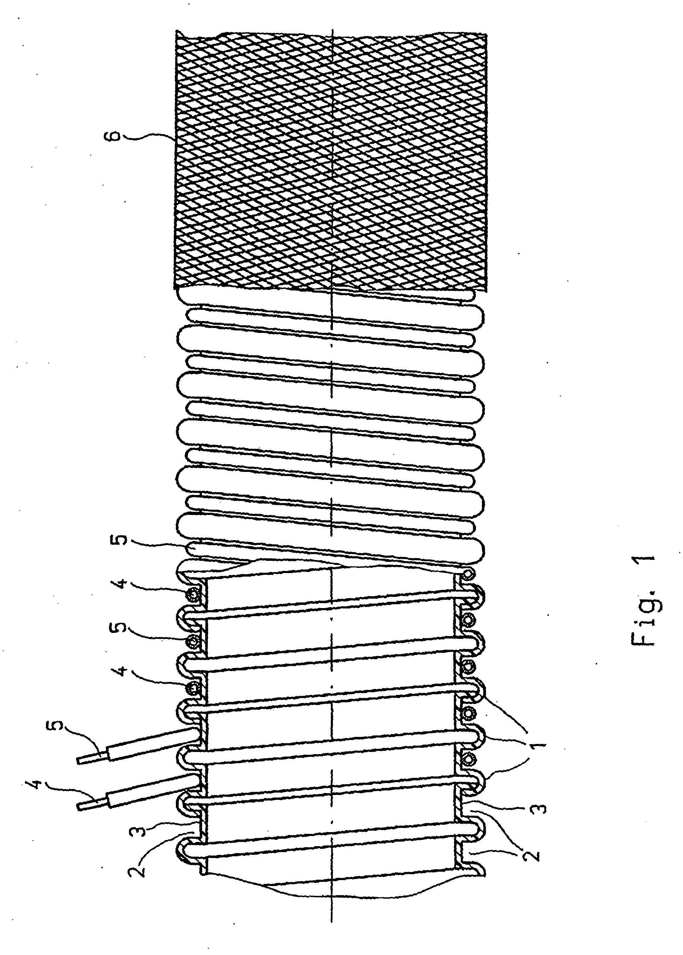

Der in Fig. 1 dargestellte Staubsaugerschlauch ist aus einem Doppelprofilstreifen schraubengangförmig und zweigängig gewickelt. Wie die Zeichnung erkennen läßt, besitzt der Profilstreifen miteinander abwechselnd zwei Rippen 1 und zwei Nuten 2, wobei die äußere Nutwand von der äußeren Rippenwand übergriffen wird und die beiden Wände beim Schlauchbildungsvorgang fortlaufend durch Kleben oder Schweißen aneinander befestigt sind. Auf diese Weise wird ein Schlauch gebildet, der von außen gesehen Nuten 2 und Rippen 1 in wechselnder Folge erkennen läßt, und von innen gesehen eine im wesentlichen zylindrische Fläche zeigt, die durch gewendelte Fugen unterbrochen ist. Derartig aufgebaute und gebildete Schläuche sind bekannt.

Wie aus Fig. 1 hervorgeht, öffnen sich bei diesem Schlauch die Nuten 2 ausgehend vom Nutgrund 3 ohne Verengung nach außen, so daß in benachbarten Nuten 2 zwei elektrische Leiter bzw. Kabel 4 und 5 auf einfache Weise, zweckmäßig schon beim Schlauchbildungsvorgang, eingelegt werden können und durch eine Profilrippe 1 voneinander getrennt den durch die Nuten 2 vorgegebenen schraubengangförmigen Wegen folgen und an den Schlauchenden in Anschlußstücken (nicht dargestellt) zur Kontaktvermittlung enden. Der Schlauch ist von einer die eingelegten elektrischen Leiter 4, 5 abdeckenden geflochtenen Schlauchhülle 6 umgeben.

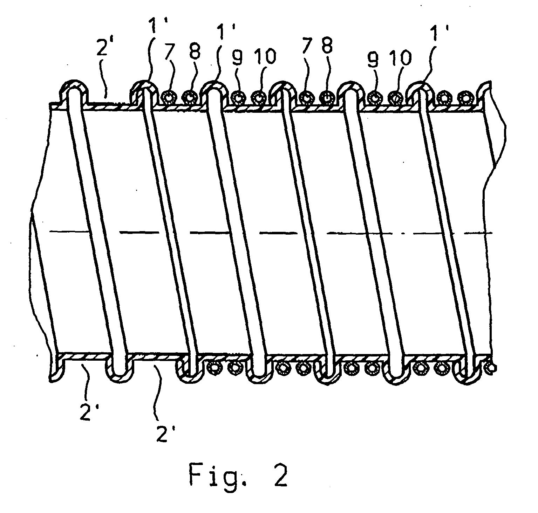

Bei dem Ausführungsbeispiel gemäß Fig. 2 entspricht der Aufbau des Schlauchs demjenigen der Fig. 1, jedoch ist die Breite der Nuten 2', d.h. der Abstand zwischen den Rippen 1' größer, um jeweils zwei nebeneinanderliegende elektrische Leiter bzw. Kabel 7, 8 und 9, 10 in jeder Nut 2' unterbringen zu können. Auch hier kann der Schlauch mit einem Geflecht überzogen bzw. umflochten sein (nicht dargestellt).

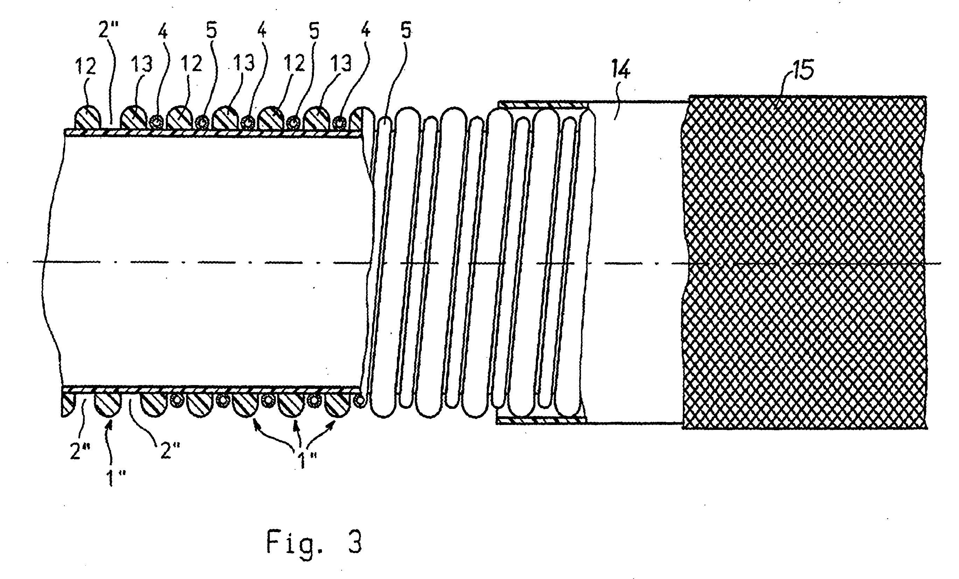

Das in Fig. 3 gezeigte Ausführungsbeispiel zeigt einen glattwandig extrusionsgeformten inneren Schlauch 11, bei dem die die Nuten 2' ' seitlich begrenzenden Rippen 1" durch mehrere, im gezeigten Beispiel durch zwei, schraubengangförmig am Außenumfang des inneren Schlauchs 11 durch Kleben oder Schweißen befestigte Profilstreifen 12 und 13 gebildet sind.

Auf den schraubengangförmig angebrachten Profilstreifen 12, 13 mit den in die dadurch gebildeten Nuten 2' ' eingelegten elektrischen Leiter oder Kabeln 4, 5 ist ein glatt- und dünnwandiger Überzugsschlauch 14 angebracht. Dieser Überzugsschlauch 14 ist von einer geflochtenen Schlauchhülle 15 umgeben.

Die geflochtene Schlauchhülle 6 bzw. 15 ist in allen Ausführungsbeispielen ein textiles Hohlgeflecht aus einem hochpolymeren Filament. In den Ausführungsbeispielen gemäß Fig. 1 und 2 dient die geflochtene Umhüllung einerseits dazu lose in die Nuten 2 bzw. 2' eingelegte elektrische Leiter 3, 4 bzw. 7, 8 und 9, 10 in den Nuten zu halten und andererseits zur Versteifung oder Verstärkung des an sich sehr biegsamen Schlauches gegen Abknicken.

Die Schläuche können aus Polyethylen (PE) oder aus einem elastomeren Copolymer aus Ethylen und Vinylacetat (EVA) hergestellt sein, aber auch Polyvinylchlorid (PVC) und Polyurethane (PUR) sind als Schlauchwerkstoffe geeignet. Beim Ausführungsbeispiel gemäß Fig. 3 kann als Werkstoff für die Profilstreifen 12 und 13 ein Kunststoff verwendet werden, der eine polymerchemische Affinität zum Schlauchwerkstoff aufweist, jedoch härter ist als dieser. Wenn der Schlauch beispielsweise aus Weich-PVC gebildet ist, können die Profilstreifen aus Hart-PVC geformt sein.

Es wird ein Schlauch, insbesondere Staubsaugerschlauch offenbart, mit mehreren nach außen offenen, schraubengangförmigen und seitlich von Rippen begrenzten Nuten zur Aufnahme elektrischer Leiter und mit einer die Nuten und die darin eingelegten elektrischen Leiter abdeckenden geflochtenen Schlauchhülle. Erfindungsgemäß öffnen sich die Nuten ausgehend vom Nutgrund ohne Verengung nach außen. Ein solcher Schlauch läßt sich besonders einfach und somit kostengünstig herstellen.

### BEZUGSZAHLENLISTE

- 1, 1', 1' ': Rippen
- 2, 2', 2' ': Nuten
- 3: Nutgrund
- 4: elektrischer Leiter
- 5: elektrischer Leiter
- 6: geflochtene Schlauchhülle
- 7: elektrischer Leiter
- 8: elektrischer Leiter
- 9: elektrischer Leiter
- 10: elektrischer Leiter
- 11: innerer Schlauch
- 12: Profilstreifen
- 13: Profilstreifen
- 14: Überzugsschlauch
- 15: geflochtene Schlauchhülle

## Patentansprüche

1. Schlauch, insbesondere Staubsaugerschlauch, mit mehreren nach außen offenen, schraubengangförmigen und seitlich von Rippen (1; 1' ; 1' ') begrenzten Nuten (2; 2'; 2' ') zur Aufnahme elektrischer Leiter (4, 5; 7, 8/ 9, 10) und mit einer die Nuten und die darin eingelegten elektrischen Leiter abdeckenden geflochtenen Schlauchhülle (6; 15), **dadurch gekennzeichnet, daß** sich die Nuten (2; 2'; 2' ') ausgehend vom Nutgrund (3) ohne Verengung nach außen öffnen.

2. Schlauch nach Anspruch 1, **dadurch gekennzeichnet, daß** bei einem aus einem Doppelprofilstreifen schraubengangförmig zweigängig gewickelten Schlauch in die Nuten (2) zwei elektrische Leiter (4, 5) eingelegt sind, die durch eine Profilrippe (1) voneinander getrennt sind.

3. Schlauch nach Anspruch 1, **dadurch gekennzeichnet, daß** bei einem aus einem Dreifachprofilstreifen schraubengangförmig dreigängig gewickelten Schlauch in die Nuten drei elektrische Leiter eingelegt sind, die durch Profilrippen voneinander getrennt sind.

4. Schlauch nach Anspruch 1, **dadurch gekennzeichnet, daß** die die Nuten (2' ') seitlich begrenzenden Rippen (1' ') durch mehrere schraubengangförmig am Außenumfang eines glattwandig extrudierten oder gewickelten Schlauchs (11) angebrachte Profilstreifen (12, 13) gebildet sind.

5. Schlauch nach einem der Ansprüche 1 bis 4, **dadurch gekennzeichnet, daß** in die Nuten (2; 2'; 2' ') jeweils zwei elektrische Leiter (7, 8/ 9, 10) paarweise eingelegt sind, die durch eine Profilrippe (1; 1'; 1' ') paarweise voneinander getrennt sind.

6. Schlauch nach einem der Ansprüche 1 bis 5, **dadurch gekennzeichnet, daß** auf die Rippen (1; 1'; 1' ') mit den in die **dadurch** gebildeten Nuten (2; 2'; 2' ') eingelegten elektrischen Leitern (4, 5; 7, 8/ 9, 10) ein glatt- und dünnwandiger Überzugsschlauch (14) aufgebracht ist, der von einer geflochtenen Schlauchhülle (15) umgeben ist.

7. Schlauch nach einem der Ansprüche 1 bis 6, **dadurch gekennzeichnet, daß** die elektrischen Leiter (4, 5; 7, 8/ 9, 10) in den Nuten (2; 2'; 2' ') durch Kleben oder Schweißen durchgehend oder in regelmäßigen Abständen befestigt sind.

8. Schlauch nach einem der Ansprüche 1 bis 7, **dadurch gekennzeichnet, daß** der Schlauch konisch oder doppeltkonisch ausgebildet ist.
